(19) Europäisches Patentamt

European Patent Office

Office européen des brevets

(11) Veröffentlichungsnummer: **0 288 964 B1**

(12) **EUROPÄISCHE PATENTSCHRIFT**

(45) Veröffentlichungstag der Patentschrift: **07.10.92**

(21) Anmeldenummer: **88106644.3**

(22) Anmeldetag: **26.04.88**

(51) Int. Cl.⁵: **B05D 7/14**, B05D 7/16

(54) Verfahren zum Beschichten von metallischen Gegenständen im Bandlackierverfahren.

(30) Priorität: **28.04.87 DE 3714076**

(43) Veröffentlichungstag der Anmeldung:
**02.11.88 Patentblatt 88/44**

(45) Bekanntmachung des Hinweises auf die
Patenterteilung:
**07.10.92 Patentblatt 92/41**

(84) Benannte Vertragsstaaten:
**AT BE CH DE ES FR GB IT LI NL SE**

(56) Entgegenhaltungen:
EP-A- 0 215 223
EP-A- 0 219 976
DE-A- 2 713 550
US-A- 4 172 160

(73) Patentinhaber: **BASF Lacke + Farben AG
Glasuritstrasse 1
W-4400 Münster(DE)**

(72) Erfinder: **Schmitz, Arno, Dr.
Lerchenhain 92
W-4405 Nottuln(DE)**
Erfinder: **Kunze, Peter Eduard
Vom-Stein-Strasse 5
W-4406 Drensteinfurt(DE)**

(74) Vertreter: **Münch, Volker, Dr. et al
c/o BASF Lacke + Farben AG Patentabteilung Glasuritstrasse 1 Postfach 61 23
W-4400 Münster(DE)**

**Beschreibung**

Die Erfindung betrifft ein Verfahren zur Beschichtung von metallischen Gegenständen im Bandlackierverfahren, bei dem auf das Metallband eine Grundierung A und ein Decklack B aufgetragen werden und bei dem in die Beschichtung Wachs eingearbeitet wird.

Es ist bekannt, zur Beschichtung von Metallbändern flüssige hitzehärtbare Beschichtungsmittel einzusetzen, die aus einer Lösung eines Hydroxylgruppen enthaltenden Bindemittels, z.B. eines Polyesters, und eines geblockten Polyisocyanats oder eines Hexamethoxymethylmelaminharzes in einem organischen Lösungsmittel bestehen. Die nach dem Coil-Coating-Verfahren gehärteten Beschichtungen besitzen relativ gute Licht- und Wetterbeständigkeiten sowie befriedigende mechanische Verformbarkeitseigenschaften. Nachteilig ist jedoch, daß sie eine für dieses Verfahren typische, sehr glatte Oberfläche aufweisen; dies ist besonders dann von Nachteil, wenn die Beschichtungsmittel zur Beschichtung von Metallbändern verwendet werden sollen, die anschließend während der Konstruktionsphase mit Metallblechen bzw. Geräteteilen kombiniert werden, welche im Spritzverfahren lackiert worden sind. Durch das Spritzverfahren wird in der Regel eine leicht unruhige, wellige Oberflächenstruktur erzeugt. Die Oberflächen von Geräteteilen, die im Pulversprühverfahren beschichtet werden, weisen ebenfalls eine mehr oder weniger ausgeprägte Oberflächenstruktur auf.

Bei konstruktionsbedingten Kombinationen von Blechen, die nach konventionellen Methoden beschichtet worden sind, mit den bandbeschichteten Blechen fällt das Fehlen der strukturierten Oberfläche bei den bandbeschichteten Blechen besonders auf.

Eine strukturierte Oberfläche ist in der Regel unempfindlicher gegenüber Schmutz- und Glanzflecken, gegenüber kleinen Kratzern usw., so daß z.B. in vielen Fällen, z.B. bei Haushaltsgeräten, strukturierte Oberflächenstrukturen bevorzugt werden.

Zur Erhöhung der Gleitfähigkeit und der Kratzfestigkeit von Bandbeschichtungen ist es bekannt, Wachslösungen bzw. Wachsfällungen neben Wachsfeindispersionen einzusetzen. Diese Additive werden dem Decklack zugesetzt. Es handelt sich dabei vorwiegend um mikronisierte Wachsdispersionen bzw. -suspensionen mit Partikelgrößen kleiner 10 $\mu$m. Die Verwendung dieser Wachsdispersionen beeinflußt jedoch die Oberflächenstruktur der Decklacke praktisch nicht. Bei einer Überdosierung bzw. bei einer Verwendung von zu grobkörnigen Wachsdispersionen treten neben einer Vermattung des Films Benetzungsstörungen in Form von Kochern, Kratzern und Löchern auf.

Aus der US-PS 4,172,160 ist ein Verfahren zur Beschichtung im Bandlackierverfahren bekannt, bei dem ein Klarlack auf ein Blech, das auch mit einem Primer beschichtet sein kann, aufgetragen wird. Der Klarlack enthält hitzehärtbare Bindemittel und hochmolekulare harte Paraffin-Wachse. Es wird eine löcherige Oberfläche erhalten, die minimale Filmdicke beträgt nahezu null. Die erhaltenen Überzüge weisen daher einen relativ schlechten Korrosionsschutz auf.

Werden Wachsdispersionen der Grundierung zugesetzt, kommt es häufig zu Benetzungsstörungen. Wird die Grundierung mit einem nichtstrukturierten Decklack unter Berücksichtigung der im Bandbeschichtungsverfahren üblichen Schichtstärken von ca. 20 $\mu$m überbeschichtet, so beobachtet man eine stark kraterartige Oberfläche. Die Zwischenschichthaftung ist oft mangelhaft. Da das Substrat teilweise nicht bzw. nur sehr ungenügend beschichtet ist, sind die resultierenden Korriosnsschutzeigenschaften der Beschichtung oftmals sehr schlecht. Auch das Deckvermögen ist in vielen Fällen sehr unbefriedigend.

Aus der EP-A 215 223 ist ein Verfahren zum Beschichten im Bandlackierverfahren bekannt, bei dem eine narbenartige Oberflächenstruktur dadurch erzeugt wird, daß der Grundierung oder dem Decklack 0,5 bis 7 Gew.-%, bezogen auf das Trockengewicht des Harzes, einer in dem Lösungs- oder Dispergiermittel suspendierten oder emulgierten organischen Substanz, deren Teilchen- oder Tröpfchengrößen zwischen 3 und 60 $\mu$m liegen, die bei der Verarbeitungstemperatur schmilzt und deren Oberflächenspannung sich von derjenigen des Harzes unterscheidet, zugesetzt werden. Bevorzugt verwendet man als Zusatzstoff ein Wachs wie z.B. modifizierte oder unmodifizierte Polyethylenwachse, Polypropylenwachse und Polyamidwachse. Die nach diesem Verfahren erhaltenen Überzüge sind aber in bezug auf die Chemikalienbeständigkeit, die Korrosionsschutzeigenschaften und die Zwischenhaftung noch verbesserungsbedürftig.

Die der Erfindung zugrundeliegende Aufgabe bestand darin, ein Verfahren zur Beschichtung von metallischen Gegenständen im Bandlackierverfahren zu entwickeln, bei dem bei den üblichen Schichtstärken von 25 bis 45 $\mu$m spritzstrukturähnliche Oberflächen erzielt werden und bei dem die resultierenden Filme insbesondere hervorragende Korrosionsschutzeigenschaften und gute Chemikalienbeständigkeiten, beispielsweise gegenüber Methylethylketon, Alkoholen und Waschmitteln, besitzen. Die Überzüge sollen eine gute Verformbarkeit aufweisen, das Deckvermögen soll gut sein, und es sollen eine gute Substrathaftung und eine gute Zwischenhaftung erzielt werden.

Die Aufgabe wird überraschenderweise gelöst durch das Verfahren der eingangs genannten Art, wobei die Strukturierung dadurch erreicht wird, daß in der Grundierung geringe Mengen eines Polyethylenwachses eingesetzt werden.

Die Erfindung betrifft ein Verfahren der eingangs genannten Art, das dadurch gekennzeichnet ist, daß die Grundierung A eine Trockenschichtstärke bis zu 25 μm aufweist und A erhalten wird aus

$a_1$) 20 bis 40 Gew.-% eines Gemisches aus

$a_1 a_1$) 70 bis 95 Gew.-% Polyester aus vorzugsweise aromatischen Dicarbonsäuren bzw. deren Anhydriden und vorzugsweise (cyclo-)aliphatischen Diolen mit einem mittleren Molekulargewicht von 2000 bis 18000 g/mol, einer Säurezahl von 1 bis 15 mg KOH/g und einer OH-Zahl von 5 bis 30 mg KOH/g und

$a_1 a_2$) 5 bis 30 Gew.-% eines Triazinharzes oder

$a_1 a_3$) 5 bis 30 Gew.-% eines blockierten Polyisocyanats,

wobei die Summe von $a_1 a_1$), $a_1 a_2$) und $a_1 a_3$) 100 Gew.-% beträgt,

$a_2$) 10 bis 40 Gew.-% Pigmenten und/oder Füllstoffen und/oder geeigneten Hilfsstoffen und Additiven,

$a_3$) 0,1 bis 2 Gew.-% eines Katalysators,

$a_4$) 20 bis 65 Gew.-% organischen Lösemittels,

$a_5$) 0,01 bis 0,05 Gew.-% eines Polyethylenwachses mit einem Erweichungspunkt zwischen 100°C und 120°C, vorzugsweise 100°C bis 110°C, mit einer Korngrößenverteilung von 5 bis 35 μm, vorzugsweise 5 bis 25 μm, in Kombination mit 0,01 bis 5 Gew.-% eines Tallölalkydharzadditives und ggf. in Kombination mit einem Verlaufsmittel,

wobei die Summe von $a_1$) bis $a_5$) 100 Gew.-% beträgt, und der Decklack B erhalten wird aus

$b_1$) 20 bis 40 Gew.-% eines Gemisches aus $b_1 b_1$) 70 bis 95 Gew.-% Polyester aus vorzugsweise aromatischen Dicarbonsäuren und vorzugsweise (cyclo-)aliphatischen Diolen mit einem mittleren Molekulargewicht von 2000 bis 8000 g/mol, einer Säurezahl von 1 bis 15 mg KOH/g und einer OH-Zahl von 5 bis 30 mg KOH/g und

$b_1 b_2$) 5 bis 30 Gew.-% eines Triazinharzes oder

$b_1 b_3$) 5 bis 30 Gew.-% eines blockierten Polyisocyanats,

wobei die Summe von $b_1 b_1$) $b_1 b_2$) und $b_1 b_3$) 100 Gew.-% beträgt und

$b_2$) 10 bis 40 Gew.-% Pigmenten und/oder Füllstoffen und/oder Hilfsstoffen und Additiven,

$b_3$) 0,1 bis 2 Gew.-% eines Katalysators und

$b_4$) 20 bis 65 Gew.-% organischer Lösemittel,

wobei die Summe von $b_1$) bis $b_4$) 100 Gew.-% beträgt,

und die Grundierung A und der Decklack B jeweils bei einer Objekttemperatur von 200 bis 260°C und bei einer Einbrennzeit von 25 bis 70 Sekunden ausgehärtet werden. Der Decklack weist Trockenschichtstärken von 10 bis 23 μm, vorzugsweise 14 bis 20 μm, auf.

Die in der Grundierung und im Decklack verwendeten Polyester sind bekannte Polyesterharze. Diese werden aufgebaut aus aliphatischen und/oder cycloaliphatischen Di-, Tri- oder höherwertigen Alkoholen, ggf. zusammen mit einwertigen Alkoholen, und aus insbesondere aromatischen Dicarbonsäuren, es können selbstverständlich aber auch aliphatische oder cycloaliphatische Carbonsäuren sowie höherwertige Polycarbonsäuren mitverwendet werden. Beispiele für geeignete Alkohole sind Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylolethan, Trimethylolpropan, Dimethylolpropionsäure, Pentaerythrit, Veretherungsprodukte von Diolen und Polyolen, z.B.: Di-und Tri-Ethylenglykol, Polyethylenglykol, Neopentylglycolester von Hydroxypivalinsäure. Bevorzugt sind Diole bzw. Triole mit 2 bis 8 Kohlenstoffatomen, wie z.B. Ethylenglykol, 2,2-Dimethyl-1,3-propandiol, 2-Methyl-2-propyl-1,3-propandiol, Glycerin, Trimethylolethan und Trimethylolpropan.

Beispiele für geeignete Carbonsäuren bzw. deren Derivate sind (cyclo-)aliphatische Dicarbonsäuren, wie z.B. Adipinsäure, Acelainsäure, Tetrahydrophthalsäure, Hexahydrophthalsäure, Endomethylentetrahydrophthalsäure und aromatische Carbonsäuren, wie Phthalsäure, Isophthalsäure, Terephthalsäure, Trimellitsäure und Pyromellitsäure. Gut geeignet sind (cyclo-)aliphatische oder aromatische Di- oder Tricarbonsäuren mit 4 bis 10 Kohlenstoffatomen, z.B. Adipinsäure, Acelainsäure und/oder Isophthalsäure. Die in der Grundierung und im Decklack verwendeten Polyester haben Säurezahlen von 1 bis 15 mg KOH/g und Hydroxylzahlen von 5 bis 30 mg KOH/g.

Geeignete Vernetzungsmittel für die Polyesterharze sind beispielsweise Triazinharze ($a_1 a_2$; $b_1 b_2$). Geeignete Harze sind beispielsweise Reaktionsprodukte von Aldehyden, wie z.B. Formaldehyd, mit Melamin oder Benzoguanamin. Bevorzugt sind diese Verbindungen teilweise oder ganz verethert mit Alkoholen, die 1 bis 6 Kohlenstoffatome enthalten, wie z.B. Methanol, Ethanol, n-Propanol, Isopropanol, n-Butanol, Isobutanol, Amylalkohol, Hexanol oder Mischungen. Besonders bevorzugt ist Hexamethoxymethylmelamin.

Alternativ können die eingesetzten Polyester auch mit blockierten Polyisocyanaten gehärtet werden. Bevorzugt werden als Polyisocyanate oligomere Polyisocyanate eingesetzt.

Beispiele für oligomere Polyisocyanate sind solche mit einer Isocyanurat-Struktur, so z.B. die Polyisocyanurat-Polyisocyanate von Hexamethylendiisocyanat und Isophorondiisocyanat. Beispiele für weitere geeignete oligomere Polyisocyanate sind solche mit einer Biuretstruktur, beispielsweise das Polyisocyanat mit Biuretstruktur auf Basis von Hexamethylendiisocyanat.

Als Blockierungsmittel für die Polyisocyanate kommen Caprolactame, z.B. $\epsilon$-Caprolactam, und Oxime in Frage.

Als Blockierungsmittel eignen sich insbesondere Oxime, vorzugsweise Butanonoxim.

Die bei dem erfindungsgemäßen Verfahren eingesetzten Beschichtungsmittel enthalten übliche Katalysatoren, wie z.B. übliche Säurekatalysatoren oder übliche zinnorganische und zinkorganische Katalysatoren. Als Beispiele seien genannt: Dibutylzinndilaurat, para-Toluolsulfonsäure, Dodecylbenzolsulfonsäure, Dinonylnaphthalindisulfonsäure, Phosphorsäure und Phosphorsäurederivate und Zinkoctoat.

Als Lösemittel kommen aromatische Kohlenwasserstoffe, Ester, Ether, Ketone, Alkohole oder auch andere organische Verbindungen in Frage. Bevorzugte Lösemittel sind aromatische Kohlenwasserstoffe, Ester und Glykolether.

Die in dem erfindungsgemäßen Verfahren eingesetzten Beschichtungsmittel für die Grundierung und für den Decklack können übliche Pigmente, Füllstoffe und andere übliche Zusatzstoffe enthalten. Als Pigmente kommen beispielsweise Titandioxyd oder anorganische Buntpigmente, wie Chrom-, Nickel-, Kobalt-und Eisenoxydpigmente sowie metallisierende Pigmente, wie Aluminiumbronze, in Frage.

Die Herstellung der verwendeten Beschichtungsmittel erfolgt durch Mischen der einzelnen Komponenten, wobei zuerst die Bindemittel im Lösemittel oder Lösemittelgemisch gelöst werden. Sofern den Beschichtungsmitteln noch weitere unlösliche Bestandteile, wie Pigmente, Füllstoffe, Additive usw. zugesetzt werden, können diese entweder in Lösung zugegeben oder mit den in der Lackindustrie üblichen Mahlaggregaten dispergiert werden.

Die verwendeten Polyethylenwachse (Komponente $a_5$) werden 5 bis 25 Gew.-%ig, vorzugsweise 10 bis 20 Gew.-%ig, in Aromaten mit einem Siedepunkt größer 130°C, beispielsweise in Xylol unter Zugabe von 10 bis 30 Gew.-% eines Tallölalkydharzes mit den in der Lackindustrie üblichen Mahlaggregaten auf die angegebene Kornfeinheit gemahlen. Das resultierende Produkt wird ggf. je nach gewünschtem Struktureffekt zusätzlich mit 20 bis 50 Gew.-% eines Tallölalkydharzes, vorzugsweise mit 30 bis 40 Gew.-% eines Tallölalkydharzes, versetzt und mit einem Dissolver intensiv eingerührt.

Die verwendeten Polyethylenwachse haben besonders bevorzugt Erweichungspunkte von 103 bis 107°C.

Das mit dem Polyethylenwachs verwendete Tallöladditiv wird besonders bevorzugt hergestellt aus 40 bis 50 Gew.-%, vorzugsweise 47 bis 48 Gew.-% Tallölfettsäure, 5 bis 10 Gew.-%, vorzugsweise 8 bis 9 Gew.-% Konjuenfettsäure, 15 bis 25 Gew.-%, vorzugsweise 19 bis 20 Gew.-% 2,2-Dimethyl-propandiol-1,3und 20 bis 30 Gew.-%, vorzugsweise 24 bis 25 Gew.-% Phthalsäureanhydrid.

Die Aushärtung der Beschichtungsmittel erfolgt gewöhnlich bei Objekttemperaturen von 200 bis 260°C nach einem in der Bandbeschichtung üblichen Verfahren, wobei Einbrennzeiten bei der Bandbeschichtung von 25 bis 70 Sekunden gewählt werden.

Bedingt durch den - im Vergleich zu den bekannten Beschichtungsmitteln für das Coil-Coating-Verfahren - geringen Wachsgehalt der in dem erfindungsgemäßen Verfahren eingesetzten Grundierungen - zeichnen sich die erhaltenen Filme durch einen sehr guten Korrosionsschutz und gute Chemikalien- und Waschmittelbeständigkeit aus. Neben einer guten Substrat- und Zwischenhaftung weisen die erhaltenen Filme ausgezeichnete Verformbarkeit, hohe Härte, gute Gleiteigenschaften und ein gutes Deckvermögen auf. Sie sind besonders geeignet für die Beschichtung von Haushaltsgeräten, wie z.B. Kühlschränken, Tiefkühltruhen, Gefrierschränken, Waschmaschinen, Geschirrspülmaschinen, Trocknern, Mikrowellenherden, Gasund Elektroherden etc., weiterhin etc., weiterhin für die Beschichtung von Regalen, Trennwänden etc. Die Oberflächen der nach dem erfindungsgemäßen Verfahren erhaltenen Überzüge sind spritzstrukturiert.

Im folgenden wird die Erfindung anhand von Ausführungsbeispielen näher erläutert. In den Ausführungsbeispielen beziehen sich alle Prozentangaben auf Gew.-%, alle Anteile auf Gew.-Teile.

| Polyester I | Gew.-Teile |
|---|---|
| Terephthalsäure | 30 |
| Isophthalsäure | 26 |
| Adipinsäure | 6 |
| Trimellitsäure | 2 |
| Ethylenglykol | 5 |
| Hexandiol-(1,6) | 11 |
| 2,2-Dimethyl-propandiol-(1,3) | 20 |

Säurezahl $\leq$ 10 mg KOH/g, Molekulargewicht 5500 g/mol, Festkörper 60 % in Solvesso 150:Butylglykol 4:1.

| Polyester II | Gew.-Teile |
|---|---|
| Isophthalsäure | 40 |
| Terephthalsäure | 20 |
| 2,2-Dimethyl-propandiol-(1,3) | 15 |
| Hexandiol-(1,6) | 25 |

Festkörper 55 % in Solvesso 150, Molekulargewicht 5000 (GPC), Tg 20°C, OH-Zahl 17-22 mg KOH/g, Säurezahl $<$3 mg KOH/g.

| Polyester III | Gew.-Teile |
|---|---|
| Terephthalsäure | 40 |
| Isophthalsäure | 40 |
| Ethylenglykol | 10 |
| 2,2-Dimethyl-propandiol-(1,3) | 10 |

Festkörper 100 %, Säurezahl 1 - 3 mg KOH/g, Molekulargewicht ca. 15000 g/mol, Tg 70°C, OH-Zahl 10 mg KOH/g

| Polyester IV | Gew.-Teile |
|---|---|
| Isophthalsäure | 12 |
| Phthalsäureanhydrid | 45 |
| Adipinsäure | 5,5 |
| Ethylenglykol | 8,8 |
| Hexandiol-(1,6) | 8,5 |
| 2,2-Dimethyl-propandiol-(1,3) | 20,2 |

Säurezahl < 5 mg KOH/g, Viskosität 4000 mPas, Festkörper 65 % in Solvesso 150:Ethylglykolacetat 8:2, OH-Zahl < 20 mg KOH/g.

| Polyester V | Gew.-Teile |
|---|---|
| Terephthalsäure | 43 |
| Isophthalsäure | 22 |
| Ethylenglykol | 13 |
| 2,2-Dimethyl-propandiol-(1,3) | 22 |

Festkörper 40 % in Solvesso 200, Säurezahl < 2 mg KOH/g, Molekulargewicht ca. 7000-8000 g/mol, OH-Zahl 20-25 mg KOH/g, Tg 70°C

| Tallölalkyd 1 | Gew.-Teile |
|---|---|
| Tallölfettsäure | 29,75 |
| Konjuenfettsäure | 5,27 |
| Phthalsäureanhydrid | 15,03 |
| 2,2-Dimethyl-propandiol-(1,3) | 12,24 |
| Benzin 60 | 37,71 |

Säurezahl 10-15 mg KOH/g, Viskosität 9-9,7 dPas

Wachssuspension 1

18,7 g Polyethylenwachs (Erweichungspunkg 103-107°C, Säurezahl 0, Dichte 0,91 g/cm$^3$, Molekulargewicht ca. 2000) werden in 61 g Xylol und 20,3 g Tallölalkyd 1 auf einer Kugel-, Perl- oder Sandmüle bis auf eine Kornfeinheit von 20-25 µm gemahlen.

Wachssuspension 2

EP 0 288 964 B1

50 g Wachsuspension 1 und 50 g Tallölalkyd 1 werden mit einem Dissolver 10-30 min intensiv zusammengerührt.

Grundierungen:

Es werden nach den üblichen Methoden verschiedene Grundierungen hergestellt. Die Zusammensetzung dieser Grundierungen ist in Tabelle 1 in Gewichtsprozent angegeben.

Als Isocyanat wurde mit Butanonoxim blockiertes trimerisiertes Hexamethylendiisocyanat, 75%ig in Solventnaphta 100 eingesetzt.

## Tabelle 1: Zusammensetzung der Grundierungen

Index a: Es wird eine 30%ige Lösung des Polyesters III in Solventnaphta (Sdp. 165-180$^{\circ}$C), Methyldiglykol, Isophoron (2:2:1) eingesetzt.

| Grundierung | 1 | 2 | 3 |
|---|---|---|---|
| Polyester I (60%ig) | 13,9 | 13,9 | - |
| Polyester II (55%ig) | 7,7 | 7,7 | - |
| Polyester III (30%ig)$^{a}$ | - | - | 64,2 |
| Titandioxid | 33,5 | 33,5 | 26,5 |
| Pyrogene Kieselsäure | 0,2 | 0,2 | - |
| Ethylglykolacetat | 5,2 | - | - |
| Propylencarbonat | - | 5,2 | - |
| Solvesso 150 | 8,6 | 10,7 | - |
| Polyester IV (65%ig) | 10,0 | 10,0 | - |
| Polyester V (40%ig) | 13,3 | 13,3 | - |
| Isocyanat (75%ig) | 6,0 | - | - |
| Hexamethoxy-methyl-melamin | - | 3,7 | 3,3 |
| Dibutylzinn-dilaurat | 0,1 | - | - |
| p-Toluolsulfonsäure (blockiert mit Versaticsäureglycidylether) | - | 0,3 | 0,2 |
| Hydrierter Bisphenol-A-diglycidyl-ether | 1,0 | 1,0 | - |
| Bisphenol-A-diglycidylether ($M_W \lessapprox 800$ g/mol) | - | - | 1,85 |
| Wachssuspension 1 | - | - | - |
| Wachssuspension 2 | 0,5 | 0,5 | 0,5 |
| Solvesso 150 | - | - | 3,45 |

7

## Tabelle 2: Zusammensetzung der Decklacke

| Decklack | 1 | 2 |
|---|---|---|
| Polyester I | 13,9 | 13,4 |
| Polyester II | 7,7 | 7,2 |
| Titandioxid | 33,5 | 32,5 |
| Antioxidans | 0,5 | 0,5 |
| Pyrogene Kieselsäure | 0,2 | 0,2 |
| Ethylglykolacetat | 5,2 | 5,2 |
| Propylencarbonat | 5,2 | 5,2 |
| Polyester IV | 10,0 | 9,5 |
| Polyester V | 13,3 | 12,5 |
| Hexamethoxy-methyl-melamin (100%ig) | 3,7 | – |
| p-Toluolsulfonsäure (blockiert) | 0,3 | – |
| Hydrierter Bisphenol-A-di-glycidylether | 1,0 | 1,0 |
| Poly-isobutylacrylat (80%ig in Solvesso 150) | 1,0 | 1,0 |
| Haftharzlösung (40%ig in Xylol LTH, Hüls AG) | 2,7 | 2,7 |
| Solvesso 150 | 1,8 | – |
| Isocyanat (blockiertes trimerisiertes HDI) *) | – | 5,9 |
| Dibutylzinndilaurat | – | 0,1 |
| Methyldiglykol | – | 3,1 |
| | 100,0 | 100,0 |

*) mit Butanonoxim blockiertes trimerisiertes Hexamethylendiisocyanat, 75%ig in Solventnaphta 100.

Die Decklacke werden ggf. mit Solvesso 150 auf 90 s (DIN 4-Becher) eingestellt.

Die Prüfung der erfindungsgemäßen Beschichtungen erfolgt nach den entsprechenden ECCA-Prüf-Verfahren (European Coil Coating Association).

8

Tabelle 3: Prüfergebnisse der Beschichtungen

| Beispiel | 1 | 2 |
|---|---|---|
| Untergrund[1] | Bonder 901 | Bonder 901 |
| Grundierung | 4 (16±8/um) | 6 (16±8/um) |
| PMT | 220°C | 220°C |
| Decklack, bei 240°C eingebrannt | 2 | 1 |
| Gesamtschichtstärke(trocken) | 34 ± 5/um | 34 ± 5/um |
| T-Bend/Tape-Test[2] | 0/0 | 0/0 |
| – nach Alterung (30'/90°C) | 0/0 | 0/0 |
| Buchholzhärte | 96 | 90 |
| Bleistifthärte | HB | HB |
| MEK-Test[3] | 200 | 200 |
| Glanz (60°) | 82 | 82 |
| Münztest[4]: Zwischenhaftung | sehr gut | sehr gut |
| Substrathaftung | sehr gut | sehr gut |
| Struktur | feine Narbe | feine Narbe |
| Waschmittelbeständigkeit[5] | gut | befriedigend |
| Alkoholbeständigkeit[6] | gut | gut |
| Korrosionsschutz[7] (Salzsprühtest 240 h) | sehr gut | gut-befriedigend |
| Feuchtraumklima 240 h[8] (SKK) | keine Blasen | einzelne kleine Bläschen |

1) phosphatiertes Stahlblech

2) Verfahren nach den ECCA-Vorschriften zur Prüfung der Haftung und der Elastizität

3) Ein mit Methylethylketon getränkter Wattebausch wird in regelmäßigen Doppelhüben über den Film bewegt, bis der Untergrund sichtbar ist. Die Auflagekraft ist ca. 20 N.

4) bis 8) Verfahren nach den ECCA-Vorschriften

**Patentansprüche**

1. Verfahren zum Beschichten von metallischen Gegenständen im Bandlackierverfahren, bei dem auf das Metallband eine Grundierung A und ein Decklack B aufgetragen werden und bei dem in die Beschich-

EP 0 288 964 B1

tung Wachs eingearbeitet wird, dadurch gekennzeichnet, daß

I.) die Grundierung A Trockenschichtdicken bis zu 25 $\mu$m aufweist und A erhalten wird aus

$a_1$) 20 bis 40 Gew.-% eines Gemisches aus $a_1 a_1$) 70 bis 95 Gew.-% Polyester aus vorzugsweise aromatischen Dicarbonsäuren bzw. deren Anhydriden und vorzugsweise (cyclo-)aliphatischen Diolen mit einem mittleren Molekulargewicht von 2000 bis 18000 g/mol, einer Säurezahl von 1 bis 15 mg KOH/g und einer OH-Zahl von 5 bis 30 mg KOH/g und

$a_1 a_2$) 5 bis 30 Gew.-% eines Triazinharzes oder

$a_1 a_3$) 5 bis 30 Gew.-% eines blockierten Polyisocyansts,

wobei die Summe von $a_1 a_1$), $a_1 a_2$) und $a_1 a_3$) 100 Gew.-% beträgt,

$a_2$) 10 bis 40 Gew.-% Pigmenten und/oder Füllstoffen und/oder geeigneten Hilfsstoffen und Additiven,

$a_3$) 0,1 bis 2 Gew.-%, eines Katalysators,

$a_4$) 20 bis 65 Gew.-% organischen Lösemittels,

$a_5$) 0,01 bis 0,05 Gew.-% eines Polyethylenwachses mit einem Erweichungspunkt zwischen 100°C und 120°C, vorzugsweise 100°C bis 110°C, mit einer Korngrößenverteilung von 5 bis 35 $\mu$m, vorzugsweise 5 bis 25 $\mu$m in Kombination mit 0,01 bis 5 Gew.-% eines Tallölalkydharzadditives und ggf. in Kombination mit einem Verlaufsmittel,

wobei die Summe von $a_1$) bis $a_5$) 100 Gew.-% beträgt,

II.) der Decklack B Trockenschichtdicken von 10 bis 23 $\mu$m, vorzugsweise 14 bis 20 $\mu$m, aufweist und B erhalten wird aus

$b_1$) 20 bis 40 Gew.-% eines Gemisches aus

$b_1 b_1$) 70 bis 95 Gew.-% Polyester aus vorzugsweise aromatischen Dicarbonsäuren und vorzugsweise (cyclo-)aliphatischen Diolen mit einem mittleren Molekulargewicht von 2000 bis 8000 g/mol, einer Säurezahl von 1 bis 15 mg KOH/g und einer OH-Zahl von 5 bis 30 mg KOH/g und

$b_1 b_2$) 5 bis 30 Gew.-% eines Triazinharzes oder

$b_1 b_3$) 5 bis 30 Gew.-% eines blockierten Polyisocyanats,

wobei die Summe von $b_1 b_1$), $b_1 b_2$) und $b_1 b_3$) 100 Gew.-% beträgt, und

$b_2$) 10 bis 40 Gew.-% Pigmenten und/oder Füllstoffen und/oder Hilfsstoffen und Additiven,

$b_3$) 0,1 bis 2 Gew.-% eines Katalysators und

$b_4$) 20 bis 65 Gew.-% organischer Lösemittel,

wobei die Summe von $b_1$) bis $b_4$) 100 Gew.-% beträgt, und die Grundierung A und der Decklag B jeweils bei einer Objekttemperatur von 200 bis 260°C und bei einer Einbrennzeit von 25 bis 70 Sekunden ausgehärtet werden.

2. Verfahren nach Anspruch 1, dadurch gekennzeichnet, daß als Triazinharz Hexamethoxymethylmelamin eingesetzt wird.

3. Verfahren nach Anspruch 1 und 2, dadurch gekennzeichnet, daß das Polyethylenwachs einen Erweichungspunkt von 103 bis 107°C hat.

4. Verfahren nach Anspruch 1 bis 3, dadurch gekennzeichnet, daß das Tallölalkydharzadditiv der Komponente $a_5$) aus 40 bis 50 Gew.-%, vorzugsweise 47 bis 48 Gew.-%, Tallölfettsäure, 5 bis 10 Gew.-%, vorzugsweise 8 bis 9 Gew.-%, Konjuenfettsäure, 15 bis 25 Gew.-%, vorzugsweise 19 bis 20 Gew.-%, 2,2-Dimethyl-propandiol-1,3 und 20 bis 30 Gew.-%, vorzugsweise 24 bis 25 Gew.-%, Phthalsäureanhydrid erhältlich ist.

## Claims

1. Process for coating metallic articles by the coil-coating process, in which a primer A and a topcoat B are applied to the metal strip and wax is incorporated into the coating, characterised in that

I.) the primer A has dry layer thicknesses of up to 25 $\mu$m and A is obtained from

$a_1$) 20 to 40% by weight of a mixture of

$a_1 a_1$) 70 to 95% by weight of polyester consisting of preferably aromatic dicarboxylic acids or anhydrides thereof and preferably (cyclo)aliphatic diols, having an average molecular weight from 2,000 to 18,000 g/mol, an acid number from 1 to 15 mg of KOH/g and an OH number from 5 to 30 mg of KOH/g, and

$a_1 a_2$) 5 to 30% by weight of a triazine resin or

10

$a_1 a_3$) 5 to 30% by weight of a blocked polyisocyanate,

the total of $a_1 a_1$), $a_1 a_2$) and $a_1 a_3$) giving 100% by weight,

$a_2$) 10 to 40% by weight of pigments and/or fillers and/or suitable auxiliaries and additives,

$a_3$) 0.1 to 2% by weight of a catalyst,

$a_4$) 20 to 65% by weight of organic solvent,

$a_5$) 0.01 to 0.05% by weight of a polyethylene wax having a softening point between 100°C and 120°C, preferably 100°C to 110°C, and a particle size distribution from 5 to 35 $\mu$m, preferably 5 to 25 $\mu$m, in combination with 0.01 to 5% by weight of a tall oil alkyd resin additive and, if appropriate, in combination with a levelling agent,

the total of $a_1$) to $a_5$) giving 100% by weight,

II.) the topcoat B has dry layer thicknesses from 10 to 23 $\mu$m, preferably 14 to 20 $\mu$m, and B is obtained from

$b_1$) 20 to 40% by weight of a mixture of

$b_1 b_1$) 70 to 95% by weight of polyester consisting of preferably aromatic dicarboxylic acids and preferably (cyclo)aliphatic diols, having an average molecular weight from 2,000 to 8,000 g/mol, an acid number from 1 to 15 mg of KOH/g and an OH number from 5 to 30 mg of KOH/g, and

$b_1 b_2$) 5 to 30% by weight of a triazine resin or

$b_1 b_3$) 5 to 30% by weight of a blocked polyisocyanate,

the total of $b_1 b_1$), $b_1 b_2$) and $b_1 b_3$) giving 100% by weight, and

$b_2$) 10 to 40% by weight of pigments and/or fillers and/or auxiliaries and additives,

$b_3$) 0.1 to 2% by weight of a catalyst, and

$b_4$) 20 to 65% by weight of organic solvents,

the total of $b_1$) to $b_4$) giving 100% by weight, and the primer A and the topcoat B are each fully cured at a peak metal temperature of 200 to 260°C for a baking time of 25 to 70 seconds.

2. Process according to Claim 1, characterised in that hexamethoxymethylmelamine is used as the triazine resin.

3. Process according to Claim 1 and 2, characterised in that the polyethylene wax has a softening point from 103 to 107°C.

4. Process according to Claims 1 to 3, characterised in that the tall oil alkyd resin additive of component $a_5$) is obtainable from 40 to 50% by weight, preferably 47 to 48% by weight, of tall oil fatty acid, 5 to 10% by weight, preferably 8 to 9% by weight, of a conjugated polyene-fatty acid, 15 to 25% by weight, preferably 19 to 20% by weight, of 2,2-dimethyl-1,3-propanediol and 20 to 30% by weight, preferably 24 to 25% by weight, of phthalic anhydride.

**Revendications**

1. Procédé pour le revêtement d'objets métalliques, par le procédé de laquage sur bande, suivant lequel une couche de fond A et une laque de recouvrement B sont appliquées sur la bande métallique et suivant lequel de la cire est incorporée dans le revêtement, caractérisé par le fait que :

(I) la couche de fond A présente des épaisseurs de couche à sec allant jusqu'à 25 $\mu$m et A est obtenue à partir de :

(a1) 20 à 40% en poids d'un mélange de :

(a1a1) 70 à 95% en poids de polyester à base d'acides dicarboxyliques, de préférence aromatiques, ou de leurs anhydrides, et de diols, de préférence (cyclo)aliphatiques, présentant une masse moléculaire moyenne de 2000 à 18 000 g/mole, un indice d'acide de 1 à 15 mg de KOH/g et une indice d'OH de 5 à 30 mg de KOH/g ; et

(a1a2) 5 à 30% en poids d'une résine de triazine, ou

(a1a3) 5 à 30% en poids d'un polyisocyanate bloqué,

la somme de (a1a1), (a1a2) et (a1a3) s'élevant à 100% en poids ;

(a2) 10 à 40% en poids de pigments et/ou de charges et/ou d'adjuvants et additifs appropriés ;

(a3) 0,1 à 2% en poids d'un catalyseur ;

(a4) 20 à 65% en poids de solvant organique ;

(a5) 0,01 à 0,05% en poids d'une cire de polyéthylène, présentant un point de ramollissement compris entre 100°C et 120°C, de préférence entre 100°C à 110°C, avec une répartition granulométrique de 5 à 35 $\mu$m, et de préférence, de 5 à 25 $\mu$m, en combinaison avec 0,01 à 5% en poids d'un additif de résine alkyde de tallol et, le cas échéant, en combinaison avec un agent favorisant l'écoulement ;

la somme de (a1) à (a5) s'élevant à 100% en poids ;

(II) la laque de recouvrement B présente des épaisseurs de couche à sec de 10 à 23 $\mu$m, de préférence de 14 à 20 $\mu$m, et B est obtenue à partir de :

(b1) 20 à 40 parties en poids d'un mélange de :

(b1b1) 70 à 95% en poids de polyester à base d'acides dicarboxyliques, de préférence aromatiques, et de diols, de préférence, (cyclo)aliphatiques, présentant une masse moléculaire moyenne de 2000 à 8000 g/mole, un indice d'acide de 1 à 15 mg de KOH/g et un indice d'OH de 5 à 30 mg de KOH/g ; et

(b1b2) 5 à 30% en poids d'une résine de triazine, ou

(b1b3) 5 à 30% en poids d'un polyisocyanate bloqué,

la somme de (b1b1), (b1b2) et (b1b3) s'élevant à 100% en poids ; et

(b2) 10 à 40% en poids de pigments et/ou de charges et/ou d'adjuvants et additifs ;

(b3) 0,1 à 2% en poids d'un catalyseur ; et

(b4) 20 à 65% en poids de solvants organiques ;

la somme de (b1) à (b4) s'élevant à 100% en poids, et la couche base A et la laque de recouvrement B sont soumises respectivement à un durcissement à une température de l'objet de 200 à 260°C et pendant un temps de cuisson de 25 à 70 secondes.

2. Procédé selon la revendication 1, caractérisé par le fait qu'on utilise, comme résine de triazine, de l'hexaméthoxyméthyl mélamine.

3. Procédé selon l'une des revendications 1 et 2, caractérisé par le fait que la cire de polyéthylène présente un point de ramollissement de 103 à 107°C.

4. Procédé selon l'une des revendications 1 à 3, caractérisé par le fait que l'additif de résine alkyde de tallol du composant (a5) est obtenu à partir de :

- 40 à 50% en poids, de préférence, 47 à 48% en poids, d'acide gras de tallol ;
- 5 à 10% en poids, de préférence, 8 à 9% en poids, d'acide gras à doubles liaisons conjuguées ;
- 15 à 25% en poids, de préférence, 19 à 20% en poids, de diméthyl-2,2 propanediol-1,3 ; et
- 20 à 30% en poids, de préférence, 24 à 25% en poids d'anhydride d'acide phtalique.